# EUROPEAN PATENT SPECIFICATION

(11) **EP 3 748 928 B1**
(45) Date of publication and mention of the grant of the patent: **21.10.2026**
(21) Application number: 19746594.1
(22) Date of filing: 21.01.2019
(51) Int. Cl.: H04L 9/40, H04W 12/03, H04W 12/041, H04W 12/08, H04W 48/08, H04W 48/16, H04W 4/50, H04W 12/086, H04W 4/70

(54) **METHOD AND SYSTEM FOR APPARATUS AWAITING NETWORK CONFIGURATION TO ACCESS HOT SPOT NETWORK APPARATUS**
VERFAHREN UND SYSTEM FÜR GERÄTE, DIE AUF EINE NETZWERKKONFIGURATION WARTEN, UM AUF EINE HOT-SPOT-NETZWERKVORRICHTUNG ZUZUGREIFEN
PROCÉDÉ ET SYSTÈME POUR APPAREIL ATTENDANT UNE CONFIGURATION DE RÉSEAU POUR ACCÉDER À UN APPAREIL DE RÉSEAU DE ZONE D'ACCÈS SANS FIL

(30) Priority: 31.01.2018 CN 201810098029
(43) Date of publication of application: 09.12.2020
(73) Proprietor: Cloud Intelligence Assets Holding (Singapore) Private Limited, Singapore 189554 (SG)
(72) Inventor: XIAO, Yuezhen, Hangzhou, Zhejiang 311121 (CN); CHEN, Chen, Hangzhou, Zhejiang 311121 (CN)
(74) Representative: Abel & Imray LLP
(86) International application number: PCT/CN2019/072482
(87) International publication number: WO 2019/149097

(56) References cited:
- EP-A1- 3 413 634
- WO-A1-2017/148082
- WO-A1-2017/198161
- WO-A1-2018/010425
- CN-A- 104 780 556
- CN-A- 105 517 012
- US-A1- 2016 021 610
- US-A1- 2018 332 041
- US-B1- 9 648 548

## Description

The present application claims priority to Chinese Patent Application No. 201810098029.6 filed on January 31, 2018, entitled "a method and system for accessing a network hotspot device by a device-to-be-configured-with-a-network".

### TECHNICAL FIELD

The present application relates to communication technologies, and particularly to a method for enabling access to a network hotspot device by a device-to-be-configured-with-a-network, a system for enabling access to a network hotspot device by a device-to-be-configured-with-a-network, an apparatus for enabling access to a network hotspot device by a device-to-be-configured-with-a-network, and one or more machine-readable medium.

### BACKGROUND

With the development of the Internet of Things, more and more smart devices use Wi-Fi to access home routers to realize functions such as remote device control and scene linkage in smart home scenarios.

Before accessing to the Internet, smart devices need to obtain Service Set Identifier (SSID) and a password of a router based on network configuration schemes to access the Internet. The current configuration scheme is mainly realized by Wi-Fi or Bluetooth.

Regardless of whether it is by means of Wi-Fi or Bluetooth, the user needs to manually enter the SSID and the password during the network configuration. There is a risk of input errors. After a user updates access information of the router, the smart device connected to the router requires the user to configure the smart device again, which negatively affect the user experience.

WO 2018/010425 A1 relates to a method and an apparatus for pushing and receiving Wi-Fi hotspot information, and a storage medium. The pushing method comprises: when it is detected that hotspot information of a first wireless local area network Wi-Fi hotspot has been modified, saving the modified hotspot information of the first Wi-Fi hotspot; establishing a second Wi-Fi hotspot, making a to-be-accessed terminal device access the second Wi-Fi hotspot, and establishing a second Wi-Fi channel; pushing to the to-be-accessed terminal device, via the second Wi-Fi channel, the modified hotspot information of the first Wi-Fi hotspot.

WO 2017/148082 A1 relates to a device access controlling method, and related device and system. A mobile device obtains first gateway access information of a smart device; the mobile device generates a corresponding first wireless-fidelity (WiFi) hotspot according to the first gateway access information; when the smart device accesses the first WiFi hotspot by means of the first gateway access information, the mobile device sends second gateway access information to the smart device so that the smart device accesses a second WiFi hotspot by means of the second gateway access information. A physical input device is not required to be provided on a smart device, thereby reducing costs of the smart device. The smart device is connected to a target gateway according to second gateway access information sent by a mobile device, thereby reducing the possibility that gateway access information is maliciously intercepted.

### SUMMARY

In view of the above problems, embodiments of the present application are provided to provide a method for enabling access to a network hotspot device by a device-to-be-configured-with-a-network and a corresponding system for enabling access to a network hotspot device by a device-to-be-configured-with-a-network to overcome the above problems or at least partially solve the above problems.

The invention is defined by the independent claims. Other features will be apparent from the dependent claims, the attached figures and the description which follows.

The embodiments of the present application include the following advantages:

In the embodiments of the present application, when the user has updated the access information of the Internet hotspot of the network hotspot device, causing the device-to-be-configured-with-a-network to be disconnected, the network to be distributed device can access the discovery hotspot of the network hotspot device. The network hotspot device may send the updated access information of the Internet hotspot to the device-to-be-configured-with-a-network through the discovery hotspot. The device-to-be-configured-with-a-network uses the access information to access the Internet hotspot of the network hotspot device.

The embodiments of the present application solves the problem that network configuration of devices is repeated after the access information of an Internet hotspot is updated, the whole process is transparent to users, does not need user participation and has very good user experience.

### BRIEF DESCRIPTION OF THE DRAWINGS

**FIG. 1** is a step flow chart of embodiment 1 of a method for accessing a network hotspot device by a device-to-be-configured-with-a-network of the present application.
**FIG. 2** is a step flow chart of embodiment 2 of a method for accessing a network hotspot device by a device-to-be-configured-with-a-network of the present application.
**FIG. 3** is a step flow chart of embodiment 3 of a method for accessing a network hotspot device by a device-to-be-configured-with-a-network of the present application.
**FIG. 4** is a flow chart of accessing a network hotspot device by a smart device of embodiments of the present application.
**FIG. 5** is a structural diagram of embodiments of a system for accessing a network hotspot device by a device-to-be-configured-with-a-network of the present application.

### DETAILED DESCRIPTION

In order to make the above-mentioned objects, features and advantages of the present application more obvious and understandable, the present disclosure will be described in further detail below with reference to the accompanying drawings and specific embodiments.

In an Internet of Things scenario, a router is used to provide WiFi hotspots for smart devices. The router can provide hotspots with Internet access and hotspots without Internet access. This kind of hotspot with the ability to access the Internet can be called an online hotspot.

Network distribution refers to the process of sending access information of Internet hotspots to smart devices. The access information includes Service Set Identifier (SSID) and password of the hotspot.

When the user updates access information of the hotspot the router, the smart device connected to the router requires the user to configure the smart device again.

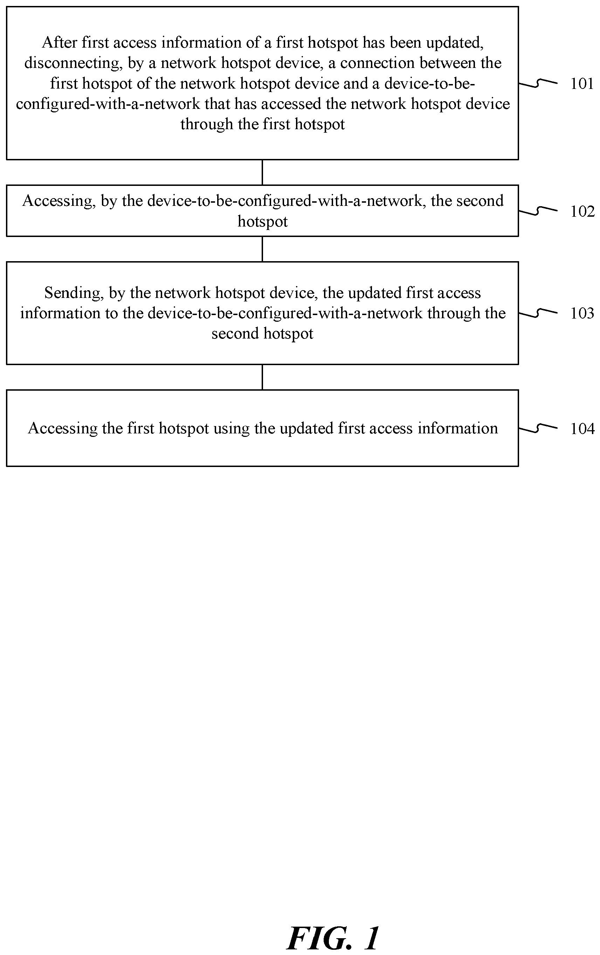

**FIG. 1** illustrates a flow chart of an exemplary method for enabling access of a device-to-be-configured-with-a-network to a network hotspot device, consistent with some embodiments of the present application. The network hotspot creates a first hotspot and a second hotspot. The method includes the following steps.

In step 101, after first access information of the first hotspot has been updated, disconnecting, by the network hotspot device, a connection between the first hotspot of the network hotspot device and the device-to-be-configured-with-a-network that has accessed the network hotspot device through the first hotspot.

In the embodiments of the present application, the network hotspot device can be a router or a wireless Access Point (AP) without routing capabilities.

The network hotspot creates a first hotspot and a second hotspot after power-on. The first hotspot is an Internet accessing hotspot that is capable of accessing the Internet. The second hotspot is a discovery hotspot that is not capable of accessing the Internet. If the device-to-be-configured-with-a-network accesses the first hotspot, the device-to-be-configured-with-a-network can communicate with the network hotspot device and can also access the Internet through the network hotspot device. If the device-to-be-configured-with-a-network accesses the second hotspot, the device-to-be-configured-with-a-network can communicate with the network hotspot device but cannot access the Internet through the network hotspot device.

The device-to-be-configured-with-a-network uses the first access information (e.g., SSID and password) corresponding to the first hotspot to access the first hotspot. After the user updates the first access information of the first hotspot, the network hotspot device disconnects the device-to-be-configured-with-a-network from the first hotspot. The step of updating the access information by the user includes: the user creates new access information, and the user modifies the original access information.

In step 102, the device-to-be-configured-with-a-network accesses the second hotspot.

After the network hotspot device disconnects the device-to-be-configured-with-a-network from the first hotspot, the device-to-be-configured-with-a-network again tries to use the old first access information to access the first hotspot, but access failure can occur. The device-to-be-configured-with-a-network also uses the access information for other Internet hotspots to try to access other Internet hotspots.

After the device-to-be-configured-with-a-network fails to access the Internet hotspot, the device-to-be-configured-with-a-network accesses the second hotspot of the network hotspot device.

In step 103, the network hotspot device sends the updated first access information to the device-to-be-configured-with-a-network through the second hotspot.

In step 104, the device-to-be-configured-with-a-network accesses the first hotspot using the updated first access information.

The device-to-be-configured-with-a-network receives the first access information sent by the network hotspot device through the second hotspot, and then the device-to-be-configured-with-a-network disconnects from the second hotspot and uses the decrypted first access information to re-access the first hotspot.

In some embodiments, the user updates the access information of the Internet hotspot of the network hotspot device, causing the device-to-be-configured-with-a-network to be disconnected, the device-to-be-configured-with-a-network can access the discovery hotspot of the network hotspot device. The network hotspot device can send the updated access information of the Internet hotspot to the device-to-be-configured-with-a-network through the discover hotspot. The device-to-be-configured-with-a-network can access the Internet access hotspot of the network hotspot device using the access information.

The embodiments of the present application provide solutions to the issue of repeated network configuration of the device after the access information of the Internet hotspot has been updated. The entire process is transparent to users, does not require user participation, and has a very good user experience.

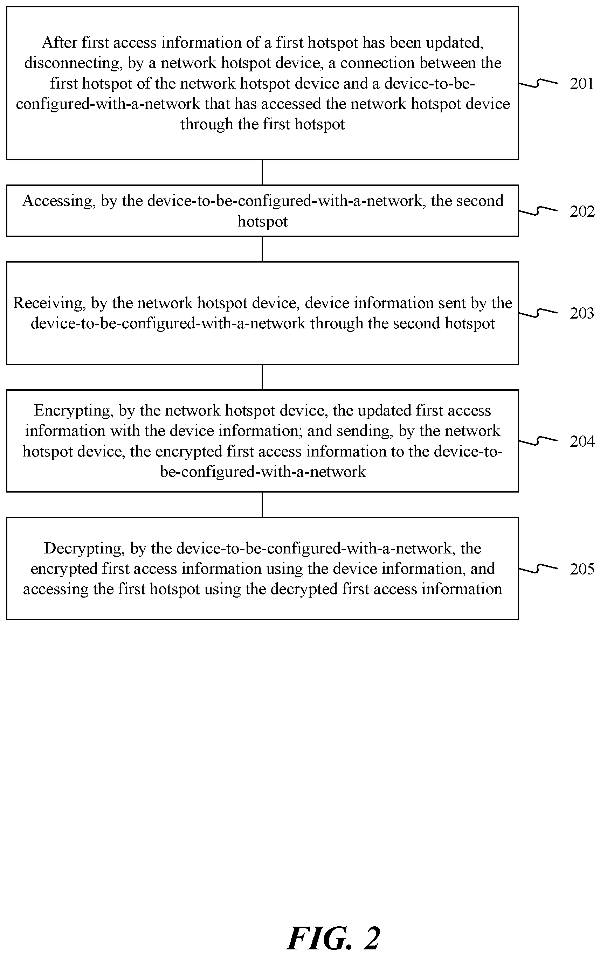

**FIG. 2** illustrates a step flow chart of embodiment 2 of a method for accessing a network hotspot device by a device-to-be-configured-with-a-network of the present application. The network hotspot creates a first hotspot and a second hotspot. The method can include the following steps.

In step 201, after first access information of the first hotspot has been updated, disconnecting, by the network hotspot device, a connection between the first hotspot of the network hotspot device and the device-to-be-configured-with-a-network that has accessed the network hotspot device through the first hotspot.

In the embodiments of the present application, the network hotspot device can be a router or a wireless Access Point (AP) without routing capabilities.

The network hotspot creates a first hotspot and a second hotspot after power-on. The first hotspot is an Internet accessing hotspot that is capable of accessing the Internet. The second hotspot is a discovery hotspot that is not capable of accessing the Internet. If the device-to-be-configured-with-a-network accesses the first hotspot, the device-to-be-configured-with-a-network can communicate with the network hotspot device and can also access the Internet through the network hotspot device. If the device-to-be-configured-with-a-network accesses the second hotspot, the device-to-be-configured-with-a-network can communicate with the network hotspot device but cannot access the Internet through the network hotspot device.

The device-to-be-configured-with-a-network uses the first access information (e.g., SSID and password) corresponding to the first hotspot to access the first hotspot. After the user updates the first access information of the first hotspot, the network hotspot device disconnects the device-to-be-configured-with-a-network from the first hotspot.

In step 202, the device-to-be-configured-with-a-network accesses the second hotspot.

After the network hotspot device disconnects the device-to-be-configured-with-a-network from the first hotspot, the device-to-be-configured-with-a-network again tries to use the old first access information to access the first hotspot, but access failure can occur. The device-to-be-configured-with-a-network also uses the access information for other Internet hotspots to try to access other Internet hotspots.

After the device-to-be-configured-with-a-network fails to access the Internet hotspot, the device-to-be-configured-with-a-network accesses the second hotspot of the network hotspot device.

In step 203, the network hotspot device obtains device information sent by the device-to-be-configured-with-a-network through the second hotspot.

When the device-to-be-configured-with-a-network accesses the second hotspot, the device-to-be-configured-with-a-network can send its own device information to the network hotspot device through the second hotspot. Device information can include the device's MAC address, random number, and other data defined by the manufacturer of the device (such as device name and device key).

In step 204, the network hotspot device uses the device information to encrypt the updated first access information and sends the encrypted first access information to the device-to-be-configured-with-a-network.

The network hotspot device can use the device information to encrypt the updated first access information and send the encrypted first access information to the device-to-be-configured-with-a-network.

In step 205, the device-to-be-configured-with-a-network uses the device information to decrypt the encrypted first access information and uses the decrypted first access information to access the first hotspot.

The device-to-be-configured-with-a-network receives the encrypted first access information sent by the network hotspot device through the second hotspot, and then uses its own device information to decrypt the encrypted first access information. Then, the device-to-be-configured-with-a-network disconnects the second hotspot and uses the decrypted first access information to re-access the first hotspot.

In some embodiments of the present application, when the user updates the access information of the Internet accessing hotspot of the network hotspot device, resulting in the offline connection the device-to-be-configured-with-a-network, it can access the discovery hotspot of the network hotspot device. Device information is sent to the network hotspot device through the discovery hotspot. The network hotspot device uses the device information to encrypt the updated access information of the Internet accessing hotspot, and then sends the encrypted access information to the device-to-be-configured-with-a-network. The device-to-be-configured-with-a-network uses its own device information to decrypt the encrypted access information, and then uses the access information to access the Internet accessing hotspot of the network hotspot device.

The embodiments of the present application solve the problem of repeated network configuration of the device after the access information of the Internet hotspot has been updated. The entire process is transparent to users, does not require user participation, and has a very good user experience. The entire process uses encryption measures to ensure data security, and uses device information for encryption, which can ensure the uniqueness of encryption for different devices and has a high security level.

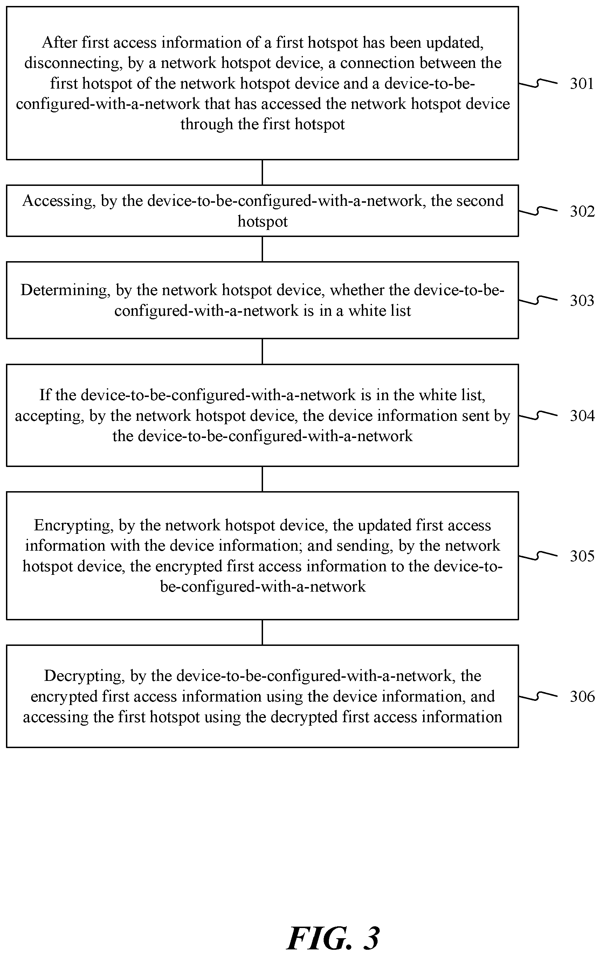

**FIG. 3** illustrates step flow chart of embodiment 3 of a method for accessing a network hotspot device by a device-to-be-configured-with-a-network of the present application. The network hotspot creates a first hotspot and a second hotspot. The method can include the following steps.

In step 301, after first access information of the first hotspot has been updated, disconnecting, by the network hotspot device, a connection between the first hotspot of the network hotspot device and the device-to-be-configured-with-a-network that has accessed the network hotspot device through the first hotspot.

The network hotspot creates a first hotspot and a second hotspot after power-on.

After the user updates the first access information of the first hotspot, the network hotspot device disconnects the device-to-be-configured-with-a-network from the first hotspot.

In the embodiments of the present application, step 302 can include:

The device-to-be-configured-with-a-network accesses the second hotspot using preset second access information for the second hotspot.

In the embodiments of the present application, the second access information (including SSID and password) of the second hotspot of the network hotspot device is fixed. In the device-to-be-configured-with-a-network, the second hotspot access information of the network hotspot device can be preset. When the device-to-be-configured-with-a-network cannot access the Internet hotspot, the device-to-be-configured-with-a-network accesses the second hotspot of the network hotspot device using the preset second access information.

In step 303, the network hotspot device determines whether the device-to-be-configured-with-a-network is in a preset white list.

The white list records the list of device-to-be-configured-with-a-networks that are allowed to access the first hotspot. If the device-to-be-configured-with-a-network is in the white list, the network hotspot device performs the process of sending the first access information to device-to-be-configured-with-a-network; if the device-to-be-configured-with-a-network is not in the white list, the network hotspot device does not send the first access information to the device-to-be-configured-with-a-network.

The white list can be stored locally on the network hotspot device. Preferably, the white list can also be stored in the server. Storing the white list in the server can prevent the white list from being leaked due to local attacks. In some embodiments of the present application, the method can further include: the network hotspot device receives a preset white list sent by the server.

In some embodiments of the present application, the device-to-be-configured-with-a-networks in the white list can also be configured by the user or can be added by the network hotspot device itself.

In the embodiments of the present application, the method can further include:

After the network hotspot device accesses the first hot spot for the first time, the network hotspot device adds the network hotspot device to the preset white list.

Specifically, after the device to be allocated network uses the first access information to access the first hotspot of the network hotspot device, the network hotspot device can add the device to be allocated to the white list.

In step 304, if the device-to-be-configured-with-a-network is in the preset white list, the network hotspot receives the device information sent by the device-to-be-configured-with-a-network.

In the embodiments of the present application, after the device-to-be-configured-with-a-network accesses the second hotspot, the device-to-be-configured-with-a-network can send its own device information to the network hotspot device through the second hotspot. If the device-to-be-configured-with-a-network is in the white list, the network hotspot device accepts the device information of the device-to-be-configured-with-a-network.

Specifically, if the device-to-be-configured-with-a-network is in the preset white list, the network hotspot device can send a device information query request message to the device-to-be-configured-with-a-network through the second network hotspot. After receiving the device information query request message, the device-to-be-configured-with-a-network sends the device information to the network hotspot device.

In the embodiments of the present application, the method can further include:

If the device-to-be-configured-with-a-network is not in the preset white list, the network hotspot device disconnects the device-to-be-configured-with-a-network from the second hotspot.

Specifically, if the device-to-be-configured-with-a-network is not in the white list, the network hotspot device does not accept the device information of the device-to-be-configured-with-a-network and disconnects the device-to-be-configured-with-a-network from the second hotspot.

In step 305, the network hotspot device uses the device information to encrypt the updated first access information and sends the encrypted first access information to the device-to-be-configured-with-a-network.

The network hotspot device uses the device information to encrypt the updated first access information and sends the encrypted first access information to the device-to-be-configured-with-a-network.

In the embodiments of the present application, the step that the network hotspot device uses the device information to encrypt the updated first access information can further include the following sub-steps:

In sub-step S11, the network hotspot device uses the device information to generate an encryption key.

In the embodiments of the present application, the network hotspot device can use the device information to generate an encryption key according to a specific key algorithm.

Specifically, for some symmetric encryption algorithms, the encryption key and the decryption key are required to be a bit string of a specific length. Therefore, it is necessary to generate the encryption key of the specific length according to a specific key algorithm.

In sub-step S12, the network hotspot device uses the encryption key to encrypt the updated first access information according to a preset symmetric encryption algorithm.

The symmetric encryption algorithm refers to an algorithm that the encrypting party and the decrypting party can use the same key for encryption and decryption, for example, Advanced Encryption Standard (AES) symmetric encryption algorithm, RC5 symmetric encryption algorithm.

After the encryption party uses the encryption key to encrypt the data according to the encryption algorithm, the decryption party can use the same decryption key as the encryption key to decrypt the encrypted data according to the inverse algorithm corresponding to the encryption algorithm.

In step 306, the device-to-be-configured-with-a-network uses the device information to decrypt the encrypted first access information and uses the decrypted first access information to access the first hotspot.

In the embodiments of the present application, the step that the device-to-be-configured-with-a-network uses the device information to decrypt the encrypted first access information can further include the following sub-steps.

In sub-step S21, the device-to-be-configured-with-a-network uses the device information to generate a decryption key.

In the embodiments of the present application, the device-to-be-configured-with-a-network uses the device information to generate the decryption key according to a specific key algorithm.

The symmetric encryption algorithm requires that the decryption key is the same as the encryption key, the device-to-be-configured-with-a-network and the network hotspot device use the same key algorithm to generate the encryption key or the decryption key.

In sub-step S22, the device-to-be-configured-with-a-network uses the decryption key to decrypt the encrypted first access information according to an inverse algorithm corresponding to the preset symmetric encryption algorithm.

The decryption key of the device-to-be-configured-with-a-network is the same as the encryption key of the network hotspot device. During decryption, the device-to-be-configured-with-a-network uses an inverse algorithm corresponding to the symmetric encryption algorithm to decrypt the encrypted first access information.

In the embodiments of the present application, when the user updates the access information of the Internet hotspot of the network hotspot device, causing the device-to-be-configured-with-a-network disconnected. The device-to-be-configured-with-a-network can be connected to the discovery hotspot of the network hotspot device. The network hotspot device judges whether the device-to-be-configured-with-a-network is in the preset white list. If the device-to-be-configured-with-a-network is in the white list, the network hotspot device accepts the device information sent by the device-to-be-configured-with-a-network through the discovery hotspot.

The network hotspot device uses the device information to generate an encryption key, and then uses a symmetric encryption algorithm to encrypt the updated access information of the Internet accessing hotspot, and then sends the encrypted access information to the device-to-be-configured-with-a-network.

The device-to-be-configured-with-a-network uses its own device information to generate a decryption key, and then decrypts the encrypted access information according to the inverse algorithm corresponding to the symmetric encryption algorithm, and then uses the access information to access the Internet hotspot of the network hotspot device.

The embodiments of the present application solve the problem of repeated network configuration of the device after access information of the Internet hotspot has been updated. The entire process is transparent to users, does not require user participation, and has an improved user experience. The entire process uses encryption measures to ensure data security, and uses device information for encryption, which can ensure the uniqueness of encryption for different devices and has a high security level.

In order to enable those skilled in the art to better understand the embodiments of the present application, the following describes the embodiments of the present application through an example.

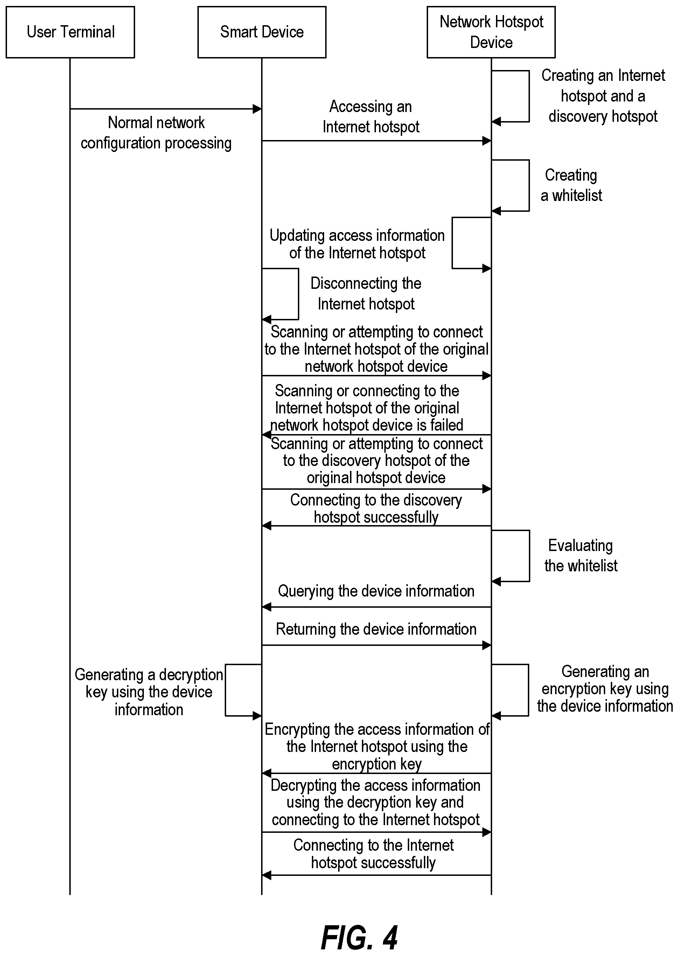

Reference is given to FIG. 4 which illustrates a flow chart of accessing a network hotspot device by a smart device of embodiments of the present application.

The network hotspot device creates an Internet hotspot and a discovery hotspot after power-on.

A user can configure the smart device through the user terminal, so that the smart device can access the hotspot of the network hotspot device.

After the smart device is connected to the Internet hotspot, the network hotspot device adds the smart device to a white list.

After the user updates the access information of the Internet hotspot, the network hotspot device disconnects the smart device from the Internet hotspot, causing the smart device to go offline.

After the smart device goes offline, the smart device scans or attempts to connect to the Internet hotspot of the original network hotspot device. If the smart device fails to scan or connect to the Internet hotspot of the original network hotspot device, the smart device scans or attempts to connect to the discovery hotspot of the original network hotspot device.

If the smart device successfully connects to the discovery hotspot of the network hotspot device, the network hotspot device evaluates the white list to determine whether the smart device is in the white list; if the smart device is in the white list, the network hotspot device queries the device information of the smart device.

The smart device sends its own device information to the network hotspot device.

The network hotspot device uses the device information to generate an encryption key. The network hotspot device uses the encryption key to encrypt the updated access information for the Internet hotspot according to a symmetric encryption algorithm, and then sends the encrypted access information to the smart device.

The smart device uses the device information to generate the same decryption key as the encryption key. The smart device uses the decryption key, decrypts the access information according to the inverse algorithm corresponding to the symmetric encryption algorithm, and then uses the access information to connect to the Internet hotspot.

It should be noted that, for simplicity of description, the method embodiments are expressed as a series of action combinations, but those skilled in the art should know that the embodiments of the present application are not limited by the sequence of actions described, because according to the embodiments of the present application, some steps may be performed in other orders or simultaneously. Secondly, those skilled in the art should also know that the embodiments described in the specification are all preferred embodiments, and the involved actions are not necessarily required by the embodiments of the present application.

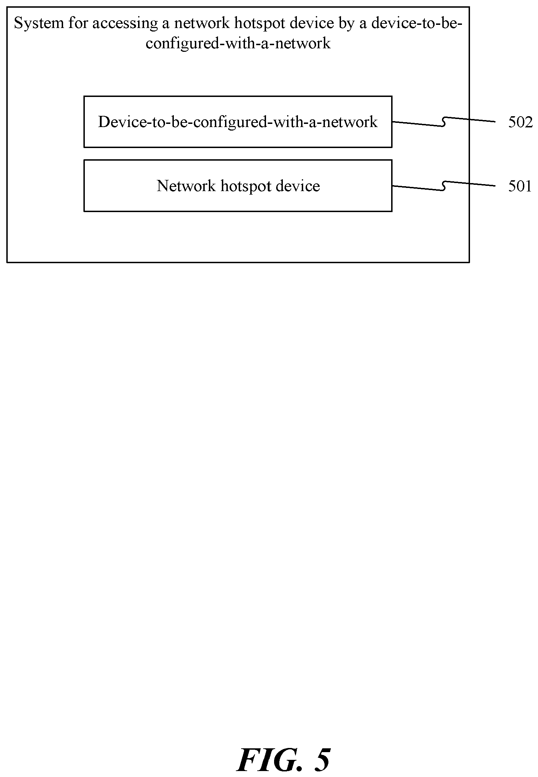

Reference is given to **FIG. 5** which illustrates a structural diagram of embodiments of a system for accessing a network hotspot device by a device-to-be-configured-with-a-network of the present application, which specifically includes: a network hotspot device 501 and a device-to-be-configured-with-a-network 502.

Network hotspot device 501 is used to create a first hotspot and a second hotspot; and after the first access information of the first hotspot is updated, network hotspot device 501 disconnects device-to-be-configured-with-a-network 502 that has accessed the first hotspot from network hotspot device 501.

Device-to-be-configured-with-a-network 502 is used to access the second hotspot.

Network hotspot device 501 is used to obtain the device information sent by device-to-be-configured-with-a-network 502 through the second hotspot, use the device information to encrypt the updated first access information, and send the encrypted first access information to device-to-be-configured-with-a-network 502.

Device-to-be-configured-with-a-network 502 is also used to decrypt the encrypted first access information by using the device information and access the first hotspot by using the decrypted first access information.

In the embodiments of the present application, network hotspot device 501 is also used to determine whether device-to-be-configured-with-a-network 502 is in the preset white list. If device-to-be-configured-with-a-network 502 is in the preset white list, network hotspot device 501 accepts the device information sent by the device-to-be-configured-with-a-network 502.

In the embodiments of the present application, network hotspot device 501 is also used to disconnect device-to-be-configured-with-a-network 502 from the second hotspot if device-to-be-configured-with-a-network 502 is not in the preset white list.

In the embodiments of the present application, network hotspot device 501 is also used to generate an encryption key using the device information and encrypt the updated first access information using the encryption keys according to a preset symmetric encryption algorithm.

In the embodiments of the present application, device-to-be-configured-with-a-network 502 is further used to generate a decryption key by using the device information and decrypting the encrypted first access information using the decryption keys according to an inverse algorithm corresponding to the preset symmetric encryption algorithm.

In the embodiments of the present application, the system can further include a server.

Network hotspot device 501 is also used to receive a preset white list sent by the server.

In the embodiments of the present application, network hotspot device 501 is also used to add device-to-be-configured-with-a-network 502 to the preset whitelist after device-to-be-configured-with-a-network 502 accesses the first hotspot for the first time.

**In** the embodiments of the present application, device-to-be-configured-with-a-network 502 is further used to access the second hotspot using preset second access information for the second hotspot.

For the device embodiment, since it is basically similar to the method embodiment, the description is relatively simple, and the relevant part can be referred to the description of the method embodiments.

The embodiments of the present application also provide an apparatus, comprising:
one or more processors; and
one or more machine-readable media having stored thereon instructions that, when executed by the one or more processors, cause the apparatus to perform one or more of the methods described in the embodiments of the present application.

The embodiments of the present application also provide one or more machine-readable medium having stored thereon instructions that, when executed by one or more processors, cause an apparatus to perform one or more of the methods described in the embodiments of the present application.

The embodiments in this specification are described in a progressive manner. Each embodiment focuses on the differences from other embodiments, and the same or similar parts between the embodiments may refer to each other.

Those skilled in the art should understand that the embodiments of the embodiments of the present application may be provided as methods, devices, or computer program products. Therefore, the embodiments of the present application may take the form of an entirely hardware embodiment, an entirely software embodiment, or an embodiment combining software and hardware. Moreover, the embodiments of the present application may take the form of computer program products implemented on one or more computer usable storage media (including but not limited to disk storage, CD-ROM, optical storage, etc.) containing computer usable program code.

The embodiments of the present application are described with reference to flowcharts and/or block diagrams of the method, terminal device (system), and computer program product according to the embodiments of the present application. It should be understood that each flow and/or block in the flowchart and/or block diagram and a combination of the flow and/or block in the flowchart and/or block diagram may be implemented by computer program instructions. These computer program instructions can be provided to the processor of a general-purpose computer, special-purpose computer, embedded processing machine, or other programmable data processing terminal device to produce a machine so that the instructions executed by the processor of the computer or other programmable data processing terminal device generate an apparatus for realizing functions specified in a block or blocks of a flowchart or a flow and/or a block diagram.

These computer program instructions may also be stored in a computer readable memory that can guide a computer or other programmable data processing terminal device to work in a specific manner, so that the instructions stored in the computer readable memory produce an article of manufacture including an instruction device. The instruction device implements the functions specified in one block or multiple blocks of the flowchart one flow or multiple flows and/or block diagrams.

These computer program instructions can also be loaded on a computer or other programmable data processing terminal device, so that a series of operation steps are performed on the computer or other programmable terminal device to generate computer-implemented processing, so that the instructions executed on the computer or other programmable terminal device provide steps for implementing functions specified in one block or multiple blocks of the flowchart one flow or multiple flows and/or block diagrams.

Although the preferred embodiments of the embodiments of the present application have been described, those skilled in the art can make additional changes and modifications to these embodiments once they learn the basic inventive concept. Therefore, the appended claims are intended to be interpreted as including the preferred embodiments and all changes and modifications fall within the scope of the embodiments of the present application.

Finally, it should also be noted that in this article, relational terms such as first and second are used only to distinguish one entity or operation from another entity or operation, and do not necessarily require or imply that there is any such actual relationship or order between entities and operations. Moreover, the terms "include", "include" or any other variant thereof are intended to cover non-exclusive inclusion, so that a process, method, article or terminal device that includes a series of elements includes not only those elements, but also those that are not explicitly listed, or also include elements inherent to such processes, methods, articles or terminal equipment. Without more restrictions, the element defined by the sentence "include one..." does not exclude that there are other identical elements in the process, method, article, or terminal device that includes the element.

The above describes in detail a method for accessing a network hotspot device by a device-to-be-configured-with-a-network and a system for accessing a network hotspot device by a device-to-be-configured-with-a-network provided by this application, and a specific example is applied to the principle of the application in this article. The implementation examples are described. The descriptions of the above examples are only used to help understand the method and the core idea of the present application. At the same time, for those of ordinary skill in the art, according to the ideas of the present application, in the specific implementation manner and application scope, all are subject to change. In summary, the content of this specification should not be interpreted as a limitation of this application.

## Claims

1. A method for enabling access to a network hotspot device (502) by a device-to-be-configured-with-a-network (501), wherein the network hotspot device is configured to create a first hotspot and a second hotspot, and the second hotspot is configured to enable the device-to-be-configured-with-a-network to communicate with the network hotspot device but not allow access to an Internet, and the method comprises:
after first access information of the first hotspot has been updated, disconnecting (101, 201, 301), by the network hotspot device, a connection between the device-to-be-configured-with-a-network that has accessed the network hotspot device through the first hotspot and the first hotspot of the network hotspot device;
accessing (102, 202, 302), by the device-to-be-configured-with-a-network, the second hotspot;
sending (103), by the network hotspot device, the updated first access information to the device-to-be-configured-with-a-network through the second hotspot; and
accessing (104), by the device-to-be-configured-with-a-network, the first hotspot using the updated first access information;
wherein the step of sending (103), by the network hotspot device, the updated first access information to the device-to-be-configured-with-a-network through the second hotspot comprises:
receiving (203), by the network hotspot device, device information sent by the device-to-be-configured-with-a-network through the second hotspot; and
encrypting (204, 305), by the network hotspot device, the updated first access information with the device information and sending the encrypted first access information to the device-to-be-configured-with-a-network;
wherein the step of accessing (104), by the device-to-be-configured-with-a-network, the first hotspot using the updated first access information comprises:
decrypting (205, 306), by the device-to-be-configured-with-a-network, the encrypted first access information using the device information and accessing the first hotspot using the decrypted first access information.

2. The method of claim 1, **characterized in**, the step of receiving (203), by the network hotspot device, the device information of the device-to-be-configured-with-a-network sent by the device-to-be-configured-with-a-network through the second hotspot comprises:
determining (303), by the network hotspot device, whether the device-to-be-configured-with-a-network is in a preset white list; and
if the device-to-be-configured-with-a-network is in the preset white list, accepting (304), by the network hotspot device, the device information sent by the device-to-be-configured-with-a-network.

3. The method of claim 2, **characterized in**, further comprising:
if the device-to-be-configured-with-a-network is not in the preset white list, disconnecting, by the network hotspot device, a connection between the device-to-be-configured-with-a-network and the second hotspot.

4. The method of claim 1, **characterized in**, the step of encrypting, by the network hotspot device, the updated first access information with the device information comprises:
generating, by the network hotspot device, an encryption key using the device information; and
encrypting, by the network hotspot device, the updated first access information using the encryption key according to a preset symmetric encryption algorithm.

5. The method of claim 4, **characterized in**, the step of decrypting, by the device-to-be-configured-with-a-network, the encrypted first access information using the device information comprises:
generating, by the device-to-be-configured-with-a-network, a decryption key using the device information;
decrypting, by the device-to-be-configured-with-a-network, the encrypted first access information using the decryption key according to an inverse algorithm corresponding to the symmetric encryption algorithm.

6. The method of claim 2, **characterized in**, further comprising:
receiving, by the network hotspot device, the preset white list from a server.

7. The method of claim 2, **characterized in**, further comprising:
after the device-to-be-configured-with-a-network accessing the first hotspot for the first time, adding, by the network hotspot device, the device-to-be-configured-with-a-network to the preset white list.

8. The method of claim 1, **characterized in**, the step of accessing, by the device-to-be-configured-with-a-network, the second hotspot comprises:
accessing, by the device-to-be-configured-with-a-network, the second hotspot using preset second access information for the second hotspot.

9. A system for enabling access to a network hotspot device (502) by a device-to-be-configured-with-a-network (501), comprising the device-to-be-configured-with-a-network and the network hotspot device, wherein:
the network hotspot device is configured to create a first hotspot and a second hotspot, and the second hotspot is configured to enable the device-to-be-configured-with-a-network to communicate with the network hotspot device but not allow access to an Internet, and
the network hotspot device is further configured to disconnect a connection between the device-to-be-configured-with-a-network that has accessed the network hotspot device through the first hotspot and the first hotspot of the network hotspot device after first access information of the first hotspot having been updated, and to send the updated first access information to the device-to-be-configured-with-a-network through the second hotspot; and
the device-to-be-configured-with-a-network is configured to access the second hotspot, and to access the first hotspot using the updated first access information;
wherein the network hotspot device sending the updated first access information to the device-to-be-configured-with-a-network through the second hotspot comprises:
receiving (203), by the network hotspot device, device information sent by the device-to-be-configured-with-a-network through the second hotspot; and
encrypting (204, 305), by the network hotspot device, the updated first access information with the device information and sending the encrypted first access information to the device-to-be-configured-with-a-network; wherein the device-to-be-configured-with-a-network accessing the first hotspot using the updated first access information comprises:
decrypting (205, 306), by the device-to-be-configured-with-a-network, the encrypted first access information using the device information and accessing the first hotspot using the decrypted first access information.

10. The system of claim 9, wherein the system is configured to perform the method of any one of claims 2 to 8.

## Patentansprüche

1. Verfahren zum Ermöglichen des Zugriffs auf ein Netzwerk-Hotspot-Gerät (502) durch ein mit einem Netzwerk zu konfigurierendes Gerät (501), wobei das Netzwerk-Hotspot-Gerät so konfiguriert ist, dass es einen ersten Hotspot und einen zweiten Hotspot erstellt, und der zweite Hotspot so konfiguriert ist, dass er dem mit einem Netzwerk zu konfigurierenden Gerät die Kommunikation mit dem Netzwerk-Hotspot-Gerät ermöglicht, jedoch keinen Zugriff auf ein Internet gewährt, und wobei das Verfahren umfasst:
nachdem erste Zugangsinformationen des ersten Hotspots aktualisiert wurden, Trennen (101, 201, 301) einer Verbindung zwischen dem mit einem Netzwerk zu konfigurierenden Gerät, das über den ersten Hotspot auf das Netzwerk-Hotspot-Gerät zugegriffen hat, und dem ersten Hotspot des Netzwerk-Hotspot-Geräts durch das Netzwerk-Hotspot-Gerät;
Zugriff (102, 202, 302) auf den zweiten Hotspot durch das mit einem Netzwerk zu konfigurierende Gerät;
Senden (103) der aktualisierten ersten Zugangsinformationen durch das Netzwerk-Hotspot-Gerät an das mit einem Netzwerk zu konfigurierende Gerät über den zweiten Hotspot; und
Zugriff (104) auf den ersten Hotspot durch das mit einem Netzwerk zu konfigurierende Gerät unter Verwendung der ersten Zugangsinformationen;
wobei der Schritt des Sendens (103) der aktualisierten ersten Zugangsinformationen durch das Netzwerk-Hotspot-Gerät an das mit einem Netzwerk zu konfigurierende Gerät über den zweiten Hotspot umfasst:
Empfangen (203) von Geräteinformationen, die von dem mit einem Netzwerk zu konfigurierenden Gerät über den zweiten Hotspot gesendet wurden, durch das Netzwerk-Hotspot-Gerät; und
Verschlüsseln (204, 305) der aktualisierten ersten Zugangsinformationen durch das Netzwerk-Hotspot-Gerät mit den Geräteinformationen und Senden der verschlüsselten ersten Zugangsinformationen an das mit einem Netzwerk zu konfigurierende Gerät;
wobei der Schritt des Zugriffs (104) auf den ersten Hotspot durch das mit einem Netzwerk zu konfigurierende Gerät unter Verwendung der aktualisierten ersten Zugangsinformationen umfasst:
Entschlüsseln (205, 306) der verschlüsselten ersten Zugangsinformationen durch das mit einem Netzwerk zu konfigurierende Gerät unter Verwendung der Geräteinformationen und Zugriff auf den ersten Hotspot unter Verwendung der entschlüsselten ersten Zugangsinformationen.

2. Verfahren nach Anspruch 1, **dadurch gekennzeichnet, dass** der Schritt des Empfangens (203) der Geräteinformationen des mit einem Netzwerk zu konfigurierenden Geräts durch das Netzwerk-Hotspot-Gerät, die von dem mit einem Netzwerk zu konfigurierenden Gerät über den zweiten Hotspot gesendet wurden, umfasst:
Feststellen (303) durch das Netzwerk-Hotspot-Gerät, ob sich das mit einem Netzwerk zu konfigurierende Gerät in einer voreingestellten Whitelist befindet; und
falls sich das mit einem Netzwerk zu konfigurierende Gerät in der voreingestellten Whitelist befindet, Akzeptieren (304) der vom mit einem Netzwerk zu konfigurierenden Gerät gesendeten Geräteinformationen durch das Netzwerk-Hotspot-Gerät.

3. Verfahren nach Anspruch 2, **dadurch gekennzeichnet, dass** es ferner umfasst:
falls sich das mit einem Netzwerk zu konfigurierende Gerät nicht in der voreingestellten Whitelist befindet, das Trennen einer Verbindung zwischen dem mit einem Netzwerk zu konfigurierenden Gerät und dem zweiten Hotspot durch das Netzwerk-Hotspot-Gerät.

4. Verfahren nach Anspruch 1, **dadurch gekennzeichnet, dass** der Schritt des Verschlüsselns der aktualisierten ersten Zugangsinformationen mit den Geräteinformationen durch das Netzwerk-Hotspot-Gerät umfasst:
Erzeugen eines Verschlüsselungsschlüssels durch das Netzwerk-Hotspot-Gerät unter Verwendung der Geräteinformationen; und
Verschlüsseln der aktualisierten ersten Zugangsinformationen durch das Netzwerk-Hotspot-Gerät unter Verwendung des Verschlüsselungsschlüssels gemäß einem voreingestellten symmetrischen Verschlüsselungsalgorithmus.

5. Verfahren nach Anspruch 4, **dadurch gekennzeichnet, dass** der Schritt des Entschlüsselns der verschlüsselten ersten Zugangsinformationen unter Verwendung der Geräteinformationen durch das mit einem Netzwerk zu konfigurierende Gerät umfasst:
Erzeugen eines Entschlüsselungsschlüssels durch das mit einem Netzwerk zu konfigurierende Gerät unter Verwendung der Geräteinformationen;
Entschlüsseln der verschlüsselten ersten Zugangsinformationen durch das mit einem Netzwerk zu konfigurierende Gerät unter Verwendung des Entschlüsselungsschlüssels gemäß einem inversen Algorithmus, der dem symmetrischen Verschlüsselungsalgorithmus entspricht.

6. Verfahren nach Anspruch 2, **dadurch gekennzeichnet, dass** es ferner umfasst:
Empfangen der voreingestellten Whitelist von einem Server durch das Netzwerk-Hotspot-Gerät.

7. Verfahren nach Anspruch 2, **dadurch gekennzeichnet, dass** es ferner umfasst:
nachdem das mit einem Netzwerk zu konfigurierende Gerät zum ersten Mal auf den ersten Hotspot zugegriffen hat, Hinzufügen des mit einem Netzwerk zu konfigurierenden Geräts zur voreingestellten Whitelist durch das Netzwerk-Hotspot-Gerät.

8. Verfahren nach Anspruch 1, **dadurch gekennzeichnet, dass** der Schritt des Zugriffs auf den zweiten Hotspot durch das mit einem Netzwerk zu konfigurierende Gerät umfasst:
Zugriff auf den zweiten Hotspot durch das mit einem Netzwerk zu konfigurierende Gerät unter Verwendung voreingestellter zweiter Zugangsinformationen für den zweiten Hotspot.

9. System zum Ermöglichen des Zugriffs auf ein Netzwerk-Hotspot-Gerät (502) durch ein mit einem Netzwerk zu konfigurierendes Gerät (501), umfassend das mit einem Netzwerk zu konfigurierende Gerät und das Netzwerk-Hotspot-Gerät, wobei:
das Netzwerk-Hotspot-Gerät so konfiguriert ist, dass es einen ersten Hotspot und einen zweiten Hotspot erstellt, und der zweite Hotspot so konfiguriert ist, dass er dem mit einem Netzwerk zu konfigurierenden Gerät die Kommunikation mit dem Netzwerk-Hotspot-Gerät ermöglicht, jedoch keinen Zugriff auf ein Internet gewährt, und
das Netzwerk-Hotspot-Gerät ferner so konfiguriert ist, dass es eine Verbindung zwischen dem mit einem Netzwerk zu konfigurierenden Gerät, das über den ersten Hotspot auf das Netzwerk-Hotspot-Gerät zugegriffen hat, und dem ersten Hotspot des Netzwerk-Hotspot-Geräts trennt, nachdem erste Zugangsinformationen des ersten Hotspots aktualisiert wurden, und es die aktualisierten ersten Zugangsinformationen über den zweiten Hotspot an das mit einem Netzwerk zu konfigurierende Gerät sendet; und
das mit einem Netzwerk zu konfigurierende Gerät so konfiguriert ist, dass es auf den zweiten Hotspot zugreift und unter Verwendung der aktualisierten ersten Zugangsinformationen auf den ersten Hotspot zugreift;
wobei das Senden der aktualisierten ersten Zugangsinformationen über den zweiten Hotspot an das mit einem Netzwerk zu konfigurierende Gerät durch das Netzwerk-Hotspot-Gerät umfasst:
Empfangen (203) von Geräteinformationen, die von dem mit einem Netzwerk zu konfigurierenden Gerät über den zweiten Hotspot gesendet werden, durch das Netzwerk-Hotspot-Gerät; und
Verschlüsseln (204, 305) der aktualisierten ersten Zugangsinformationen mit den Geräteinformationen durch das Netzwerk-Hotspot-Gerät und Senden der verschlüsselten ersten Zugangsinformationen an das mit einem Netzwerk zu konfigurierende Gerät;
wobei das Zugreifen auf den ersten Hotspot unter Verwendung der ersten Zugangsinformationen durch das mit einem Netzwerk zu konfigurierende Gerät umfasst:
Entschlüsseln (205, 306) der verschlüsselten ersten Zugangsinformationen durch das mit einem Netzwerk zu konfigurierende Gerät unter Verwendung der Geräteinformationen und Zugriff auf den ersten Hotspot unter Verwendung der entschlüsselten ersten Zugangsinformationen.

10. System nach Anspruch 9, wobei das System so konfiguriert ist, dass es das Verfahren nach einem der Ansprüche 2 bis 8 ausführt.

## Revendications

1. Un procédé pour permettre l'accès à un dispositif de point d'accès réseau (502) pour un dispositif-à-configurer-pour-un-réseau (501), dans lequel le dispositif de point d'accès réseau est configuré pour créer un premier point d'accès et un deuxième point d'accès, et le deuxième point d'accès est configuré pour permettre au dispositif-à-configurer-pour-un-réseau de communiquer avec le dispositif de point d'accès réseau sans toutefois autoriser l'accès à Internet, et le procédé comprend :
- après que des premières informations d'accès du premier point d'accès ont été mises à jour, interrompre (101, 201, 301), par le dispositif de point d'accès réseau, une connexion entre le dispositif-à-configurer-pour-un-réseau, qui a accédé au dispositif de point d'accès réseau via le premier point d'accès, et le premier point d'accès du dispositif de point d'accès réseau ;
- accéder (102, 202, 302), par le dispositif-à-configurer-pour-un-réseau, au second point d'accès ;
- envoyer (103), par le dispositif de point d'accès réseau, les premières informations d'accès mises à jour au dispositif-à-configurer-pour-un-réseau via le deuxième point d'accès ; et
- accéder (104), par le dispositif-à-configurer-pour-un-réseau, au premier point d'accès en utilisant les premières informations d'accès mises à jour ;
dans lequel l'étape d'envoyer (103), par le dispositif de point d'accès réseau, les premières informations d'accès mises à jour au dispositif-à-configurer-pour-un-réseau via le deuxième point d'accès comprend :
- recevoir (203), par le dispositif de point d'accès réseau, des informations de dispositif envoyées par le dispositif-à-configurer-pour-un-réseau via le deuxième point d'accès ; et
- chiffrer (204, 305), par le dispositif de point d'accès réseau, les premières informations d'accès mises à jour avec les informations de dispositif et envoyer les premières informations d'accès chiffrées au dispositif-à-configurer-pour-un-réseau ;
dans lequel l'étape d'accéder (104), par le dispositif-à-configurer-pour-un-réseau, au premier point d'accès en utilisant les premières informations d'accès mises à jour comprend :
- déchiffrer (205, 306), par le dispositif-à-configurer-pour-un-réseau, les premières informations d'accès chiffrées en utilisant les informations de dispositif, et accéder au premier point d'accès en utilisant les premières informations d'accès décryptées.

2. Le procédé de la revendication 1, **caractérisé en ce que** l'étape de recevoir (203), par le dispositif de point d'accès réseau, les informations de dispositif relatives au dispositif-à-configurer-pour-un-réseau envoyées par le dispositif-à-configurer-pour-un-réseau via le deuxième point d'accès comprend :
- déterminer (303), par le dispositif de point d'accès réseau, si le dispositif-à-configurer-pour-un-réseau figure dans une liste blanche prédéfinie ; et
- si le dispositif-à-configurer-pour-un-réseau figure dans la liste blanche prédéfinie, accepter (304), par le dispositif de point d'accès réseau, les informations de dispositif envoyées par le dispositif-à-configurer-pour-un-réseau.

3. Le procédé de la revendication 2, **caractérisé en ce qu'**il comprend en outre :
- si le dispositif-à-configurer-pour-un-réseau ne figure pas dans la liste blanche prédéfinie, interrompre, par le point d'accès réseau, la connexion entre le dispositif-à-configurer-pour-un-réseau et le deuxième point d'accès.

4. Le procédé de la revendication 1, **caractérisé en ce que** l'étape de chiffrer, par le dispositif de point d'accès réseau, les premières informations d'accès mises à jour avec les informations de dispositif comprend :
- générer, par le dispositif de point d'accès réseau, une clé de chiffrement en utilisant les informations de dispositif ; et
- chiffrer, par le dispositif de point d'accès réseau, les premières informations d'accès mises à jour en utilisant la clé de chiffrement, selon un algorithme de chiffrement symétrique prédéfini.

5. Le procédé de la revendication 4, **caractérisé en ce que** l'étape de déchiffrer, par le dispositif-à-configurer-pour-un-réseau, les premières informations d'accès chiffrées en utilisant les informations de dispositif comprend :
- générer, par le dispositif-à-configurer-pour-un-réseau, une clé de déchiffrement en utilisant les informations de dispositif ; et
- déchiffrer, par le dispositif de point d'accès réseau, les premières informations d'accès chiffrées en utilisant la clé de déchiffrement, selon un algorithme inverse correspondant à l'algorithme de chiffrement symétrique.

6. Le procédé de la revendication 2, **caractérisé en ce qu'**il comprend en outre :
- recevoir la liste blanche prédéfinie d'un serveur.

7. Le procédé de la revendication 2, **caractérisé en ce qu'**il comprend en outre :
- après que le dispositif-à-configurer-pour-un-réseau a accédé au premier point d'accès pour la première fois, par le dispositif point d'accès réseau, ajouter le dispositif-à-configurer-pour-un-réseau à la liste blanche prédéfinie.

8. Le procédé de la revendication 1, **caractérisé en ce que** l'étape d'accéder, par le dispositif-à-configurer-pour-un-réseau, au second point d'accès comprend :
- accéder, par le dispositif-à-configurer-pour-un-réseau, au second point d'accès en utilisant des deuxièmes informations d'accès prédéfinies pour le second point d'accès.

9. Un système pour permettre l'accès à un dispositif de point d'accès réseau (502) pour un dispositif-à-configurer-pour-un-réseau (501), comprenant le dispositif de point d'accès réseau et le dispositif-à-configurer-pour-un-réseau, dans lequel :
- le dispositif de point d'accès réseau est configuré pour créer un premier point d'accès et un deuxième point d'accès, et le deuxième point d'accès est configuré pour permettre au dispositif-à-configurer-pour-un-réseau de communiquer avec le dispositif de point d'accès réseau sans toutefois autoriser l'accès à Internet, et
- le dispositif de point d'accès réseau est en outre configuré pour interrompre une connexion entre le dispositif-à-configurer-pour-un-réseau, qui a accédé au dispositif de point d'accès réseau via le premier point d'accès, et le premier point d'accès du dispositif de point d'accès réseau, après que des premières informations d'accès du premier point d'accès ont été mises à jour, et pour envoyer les premières informations d'accès mises à jour au dispositif-à-configurer-pour-un-réseau via le deuxième point d'accès ;
- le dispositif-à-configurer-pour-un-réseau est configuré pour accéder au second point d'accès, et pour accéder au premier point d'accès en utilisant les premières informations d'accès mises à jour ; et
dans lequel le dispositif de point d'accès réseau envoyant les premières informations d'accès mises à jour au dispositif-à-configurer-pour-un-réseau via le deuxième point d'accès comprend :
- recevoir (203), par le dispositif de point d'accès réseau, des informations de dispositif envoyées par le dispositif-à-configurer-pour-un-réseau via le deuxième point d'accès ; et
- chiffrer (204, 305), par le dispositif de point d'accès réseau, les premières informations d'accès mises à jour avec les informations de dispositif et envoyer les premières informations d'accès chiffrées au dispositif-à-configurer-pour-un-réseau ;
dans lequel le dispositif-à-configurer-pour-un-réseau accédant au premier point d'accès en utilisant les premières informations d'accès mises à jour comprend :
- déchiffrer (205, 306), par le dispositif-à-configurer-pour-un-réseau, les premières informations d'accès chiffrées en utilisant les informations de dispositif, et accéder au premier point d'accès en utilisant les premières informations d'accès décryptées.

10. Le système de la revendication 9, dans lequel le système est configuré pour exécuter le procédé de l'une quelconque des revendications 2 à 8.
